# EUROPEAN PATENT APPLICATION

(11) **EP 4 801 072 A1**
(43) Date of publication of application: **02.09.2026**
(21) Application number: 25207803.5
(22) Date of filing: 09.10.2025
(51) Int. Cl.: H04W 4/06, H04W 4/80, H04W 72/0446, H04W 72/30, H04W 84/18, H04H 20/00, H04W 56/00, H04L 65/611

(54) **METHOD FOR COMMUNICATING IN A BLE COMMUNICATION NETWORK, BLE COMMUNICATION NETWORK AND NODE THEREFOR**

(30) Priority: 26.02.2025 AT 501302025
(71) Applicant: Technische Universität Graz, 8010 Graz (AT)
(72) Inventor: GASTEIGER, Theo, 8224 Kaindorf (AT); SCHUSS, Markus, 8010 Graz (AT); BOANO, Carlo Alberto, 8010 Graz (AT)
(74) Representative: Weiser Voith Gugler Patentanwälte Partnerschaft

(57) **Abstract**

A method (2) for communicating in a BLE communication network (1) comprising nodes configured to broadcast data (D) via a BIS (B) only when holding a token (T), the method comprising: by a first node (N₁), holding (3) the token (T), advertising (4) timing information (TI), and broadcasting (5) data (D) via the BIS according to said timing information; by a second node (N₂), communicating (6) a token passing request (R) to the first node; by the first node, receiving (7) the token passing request, passing (8) the token, and listening (9) to the BIS; and by the second node, holding (10) the token and broadcasting (11) data via the BIS. A BLE communication network (1) carries out said method and a node (N₁) of the BLE communication network carries out steps of said method.

## Description

The present invention relates to a method for communicating in a Bluetooth Low Energy (BLE) communication network, a BLE communication network performing said method, and a node for the BLE communication network.

The Bluetooth Core Specification Version 5.2 has introduced low energy (LE) isochronous physical channels, also known as isochronous channels. These isochronous channels provide connectionless unidirectional communications from a broadcasting node to listening nodes of the BLE communication network via broadcast isochronous streams (BISes) and connection-oriented bidirectional communications between nodes of the BLE communication network via connected isochronous streams (CISes) .

BISes are designed for unidirectional communication with low latency and allow for a fast and simple joining of a new node by synchronising and listening to the BIS according to the timing information of the BIS.

In contrast thereto, CISes are designed for bidirectional communication but require the establishment of BLE links via Asynchronous Connection-Oriented Logical (ACL) channels. Thus, whenever a new node joins a bidirectional communication, e.g. for the first time or after losing connection, it has to tediously establish BLE links to all other nodes. This is particularly tedious when the nodes are moving and often losing connection, e.g. in the case of vehicle-carried nodes in a convoy of vehicles, etc. Moreover, CISes require dedicated time slots for return data which reduces the available airtime, requires resources even when no data is exchanged, and increases latency.

It is an object of the present invention to provide a BLE communication network, a node for the BLE communication network, and a method for communicating in the BLE communication network which allow for an improved BLE communication.

This object is achieved in a first aspect of the invention by a method for communicating in a BLE communication network comprising a plurality of nodes, each of which is configured to broadcast data via a BIS only when holding a token, wherein the method comprises:
by a first node of the BLE communication network, holding the token, advertising timing information of the BIS, and broadcasting data via the BIS according to said timing information;
by a second node of the BLE communication network, communicating a token passing request to the first node;
by the first node, receiving the token passing request, passing the token to the second node, and listening to the BIS according to said timing information; and
by the second node, holding the token and broadcasting data via the BIS according to said timing information.

The present invention utilises a BIS for connection-less isochronous bidirectional communication between two or more nodes. To orchestrate this communication and avoid cross-talk, only the node holding the token (the "broadcasting node") broadcasts data via the BIS. Another node requests the token when it needs to broadcast data in order to participate in the bidirectional communication. After passing the token, the former broadcasting node listens to the BIS according to the timing information advertised by that node and, thus, stays synchronised to the BIS even before the other node has advertised the timing information of the BIS. In this way, an ad-hoc BLE communication network allowing for bidirectional communication between two or more nodes with a seamless, unnoticed change of the broadcasting node and a low latency is provided.

Initially, the first node holds the token, advertises timing information to synchronise the nodes and broadcasts data via the BIS according to the timing information. The second node requests the token from the first node to switch role from listening node ("synchronised receiver") to broadcasting node. Upon receiving the request, the first node passes the token to the second node and, after passing the token, stays synchronised according to the timing information advertised before by the first node. Thus, the first node as well as optional further nodes stay synchronised to one and the same BIS despite the role switching.

New nodes joining the BLE communication network simply synchronise according to the advertised timing information to listen to the BIS and need not establish a BLE link to all other nodes. As no dedicated time slots have to be reserved for return data in the communication via the BIS, a particularly low latency is achieved, even in a communication with many participating nodes. As a result, the number of participating nodes is not limited.

Summing up, the inventive method provides a low latency, bidirectional communication between an unlimited number of nodes and, thus, improves state of the art BLE communications.

In a preferred embodiment, the second node establishes a BLE link with the first node and communicates the token passing request by means of the BLE link, in particular via a Generic Attribute Profile (GATT) communication or via a CIS. Thereby, the robustness of connection oriented communication via the BLE link is utilised for token passing while the low latency and high scalability of the BIS is utilised for communication with an unlimited number of nodes.

When the first and second nodes are outside of each other's communication range and the BLE network comprises a third node in each of the communication ranges of the first and second nodes, the third node may advantageously announce a presence of the token in its communication range to the second node, the second node may communicate the token passing request via the third node to the first node, and the first node may pass the token to the second node via the third node. In this way, the second node can request the token from the first node and communicate via the BIS even when it is located outside of the communication range of the first node. Thus, the low latency bidirectional communication can be carried out even for nodes within a two-hop neighbourhood, i.e. for nodes which can communicate with each other only via an intermediary node.

The token may be pre-generated or generated within the method. In the latter case, the method preferably comprises, by the first node, before holding the token, checking that no node in its communication range holds the token or announces the presence of the token and, after said checking, creating the token. Thereby, the first node generates the token only when it is not aware of another token in its vicinity to preserve the uniqueness of the token and, thus, avoid cross-talk within its one-hop neighbourhood (when checking that no node in its communication range holds the token) or within its two-hop neighbourhood (when also checking that no node in its communication range announces the token). In a particularly preferable variant thereof, the first node performs said checking in a number of at least two subsequent time intervals before creating the token, wherein said number is either node-specific or determined by the first node in a randomized manner. In this variant, the generation of two tokens in the same time interval is hindered, in that different nodes wishing to create and hold the token check either for different node-specific numbers of time intervals or for (presumably different) randomly determined numbers of time intervals. Thus, the uniqueness of the token in the vicinity of the first node is preserved and cross-talk is avoided.

As another measure to preserve the uniqueness of the token in a node's vicinity, the method favourably comprises, by one node of the BLE communication network, detecting the presence of two tokens in its communication range and initiating the removal of one of the two tokens. Said one node may detect the presence of two tokens e.g. by receiving BLE advertisements and/or BIS broadcasts from two nodes, and may initiate the removal of one of the two tokens, e.g., by communicating a token removing request to one of the token-holding nodes or by requesting both tokens and removing one on its own.

In a second aspect, the invention provides a BLE communication network comprising a plurality of nodes, each of which is configured to broadcast data via a BIS only when holding a token,
wherein a first node of the BLE communication network is configured to hold the token, advertise timing information of the BIS, and broadcast data via the BIS according to the timing information,
wherein a second node of the BLE communication network is configured to communicate a token passing request to the first node;
wherein the first node is further configured to receive the token passing request, pass the token to the second node, and listen to the BIS according to said timing information; and
wherein the second node is further configured to hold the token and broadcast data via the BIS according to said timing information.

In a third aspect, the invention provides a node for the BLE communication network, wherein the node is configured to hold a token, to advertise timing information of a BIS, to broadcast data via the BIS according to the timing information, to receive a token passing request from an other node of the BLE communication network, to pass the token to said other node, and to listen to the BIS according to the timing information, wherein the node is configured to broadcast data via the BIS only when holding the token.

The BLE communication network carries out the above-mentioned method and the node carries out steps of the above-mentioned method. To this end, the BLE communication network and the node may make use of the above-mentioned embodiments of the method to achieve the above-mentioned advantages.

The invention will now be described by means of exemplary embodiments thereof with reference to the enclosed drawings, in which:
Fig. 1 shows a BLE communication network in the process of carrying out a method for communicating in the BLE communication network according to the present invention in a schematic diagram;
Fig. 2 shows the method carried out by the BLE communication network of Fig. 1 in a flow chart;
Fig. 3 shows signals transmitted by nodes of the BLE communication network of Fig. 1 in the process of carrying out the method of Fig. 2 in a time diagram;
Fig. 4 shows the BLE communication network of Fig. 1 with switched roles of two of its nodes after passing a token in a schematic diagram;
Fig. 5 shows the BLE communication network of Fig. 1 with changed positions of its nodes in the process of carrying out a variant of the method of Fig. 2 in a schematic diagram;
Fig. 6 shows signals transmitted by nodes of the BLE communication network of Fig. 5 in the process of carrying out the variant of the method of Fig. 2 in a time diagram; and
Fig. 7 shows a periodic check performed by a node of the BLE communication network of Figs. 1, 4 and 5 in the process of carrying out a further variant of the method of Fig. 2 in a time diagram.

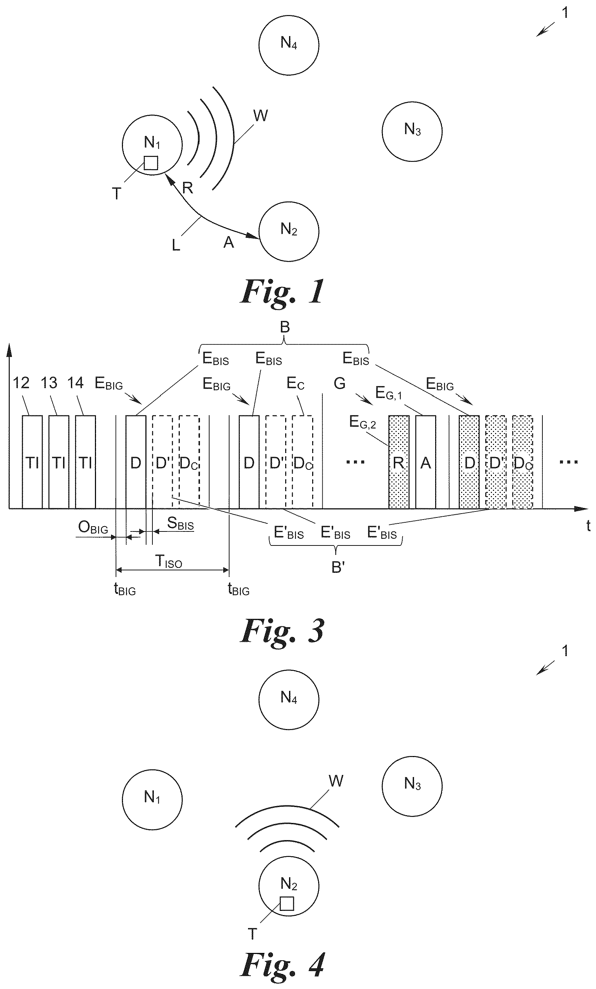

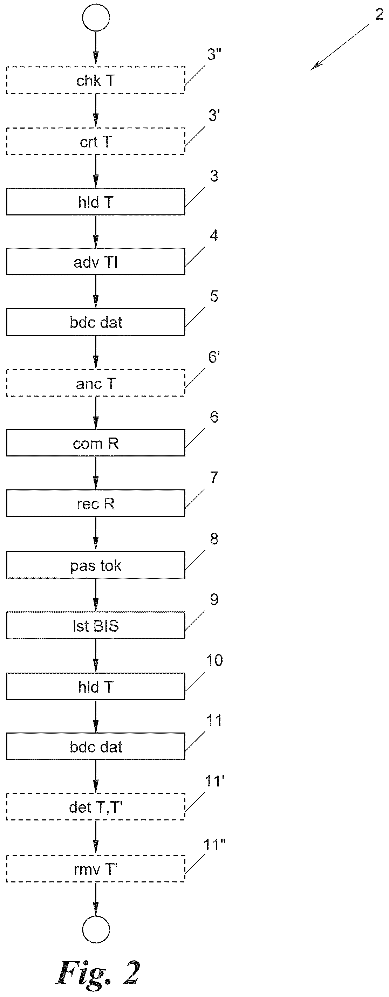

Fig. 1 shows a Bluetooth Low Energy (BLE) communication network 1 which comprises a plurality of two, three or more (here: four) nodes N₁, N₂, ..., generally Nᵢ, as often used, e.g., in wearables, BLE Audio, Internet of Things (IoT), smart home, automotive, healthcare, etc. applications. In the present example, the BLE communication network 1 comprises a first node N₁, a second node N₂, a third node N₃ and a fourth node N₄. The nodes Nᵢ perform a communication via a broadcast isochronous stream (BIS) B (Fig. 3) according to a method 2 shown in Fig. 2. The BIS is defined in the Bluetooth Core Specification Version 5.2 or higher and has been designed for unidirectional communication from one broadcasting node to other nodes. However, the BLE communication network 1 utilises the BIS B for bidirectional communication, i.e. each node Nᵢ is capable to broadcast data D via the BIS B and to listen to the BIS B in order to receive data D that is broadcasted by an other node Nᵢ.

To impede cross-talk and orchestrate this communication in the BLE communication network 1, each of the nodes Nᵢ is configured to broadcast data D via the BIS B only when holding a token T. Therefor, the nodes Nᵢ may be preconfigured or be configured in an initial step of the method 2 (not shown).

With reference to Figs. 1 to 4, it shall be explicated that the nodes Nᵢ of the BLE communication network 1 carry out steps 3 - 11 of the method 2 to perform the bidirectional communication.

Initially, as symbolised by first step 3 of the method 2, the first node N₁ holds the token T. The token T may be any symbol, flag, sign, etc. indicating that the token-holding node is the current broadcasting node (illustrated by broadcast waves W in Fig. 1) and may be held by the first node N₁ in a memory or the like until the token T is passed in step 8 as described further below.

In a second step 4 of the method 2, the first node N₁ advertises timing information TI of the BIS B, e.g., as illustrated in Fig. 3 by means of BLE advertisements 12 - 14 in one or more (here: all three) of the foreseen BLE advertising channels. In Fig. 3, empty rectangles denote signals transmitted by the first node N₁ and dotted rectangles denote signals transmitted by the second node N₂. The timing information TI is used to synchronise the nodes Nᵢ which - after synchronisation - listen to the BIS B according to the timing information TI. The timing information TI may be any information allowing for node synchronisation and may, e.g., include data provided by the Bluetooth Core Specification like Broadcast Isochronous Group (BIG) anchor point/s t_{BIG}, ISO Interval T_{ISO}, BIG Offset O_{BIG}, BIS spacing S_{BIS}, Number of BISes in the BIG, etc.

In a third step 5 of the method 2, the first node N₁ broadcasts data D via the BIS B according to the timing information TI advertised in step 4. In one example illustrated by solid rectangles in Fig. 3, the first node N₁ broadcasts data D only in one BIS B, i.e. each BIG event E_{BIG} comprises only one BIS event E_{BIS} of the single BIS B. In another example illustrated by dashed rectangles in Fig. 3, the first node N₁ additionally broadcasts data D' in a further BIS B', i.e. each BIG event E_{BIG} also comprises an additional event E'_{BIS} of a further BIS B'. In the example shown, only the node N₁ holding the token T broadcasts data D, D' in the BIG, be it via one, two or more BISes B, B'. As illustrated in Fig. 3, each BIG event E_{BIG} may optionally comprise a control subevent E_{C} for transmitting control data D_{C}.

The other nodes N₂ - N₄ listen to the first node N₁ according to the timing information TI and may receive the data D, D' in the course of listening. Optionally, the other nodes N₂ - N₄ are informed that the first node N₁ is holding the token T. To this end, the first node N₁ may include information about the token T when advertising the timing information TI in step 4, in particular in the BLE advertisements 12 - 14, and/or when broadcasting the data D in step 5, in particular in the BIS events E_{BIS}. Alternatively, the other nodes N₂ - N₄ may be informed implicitly by the fact that the first node N₁ is advertising timing information TI or broadcasting data D.

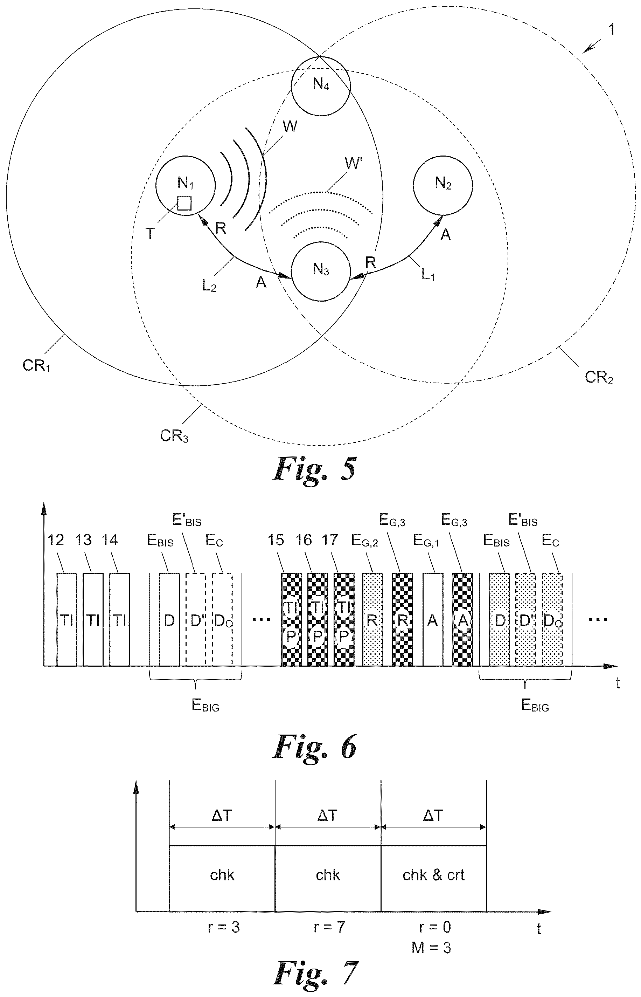

In a fourth step 6 of the method 2, the second node N₂ - wishing to communicate to the other nodes Nᵢ - communicates a token passing request R to the first node N₁. In the variant of Figs. 1 and 3, the second node N₂ establishes a BLE link L and communicates the token passing request R by means of the BLE link L, e.g. via a Generic Attribute Profile (GATT) communication G in one or more GATT operations E_{G,2} or via a connected isochronous stream (CIS) in one or more CIS transmission events as defined in the Bluetooth Core Specification Version 5.2 or higher. In another variant, the second node N₂ communicates the token passing request R by means of Periodic Advertising with Responses (PAwR). A further variant of communicating the token passing request R will be described below with reference to Figs. 5 and 6.

The first node N₁ receives the token passing request R in a fifth step 7 of the method 2 and passes the token T to the second node N₂ in a sixth step 8 of the method 2. For passing the token T, the first node N₁ may transmit a confirmation A to the second node N₂, e.g. via the GATT communication G in a GATT operation E_{G,1} transmitted by the first node N₁ shown in Fig. 3, via a CIS in a CIS transmission event (not shown), via the BIS in a BIS event E_{BIS} (not shown), or via BLE advertisements (not shown). The confirmation A may include the token T or an explicit or implicit indication that the second node N₂ shall hold the token T from now on.

Instead of passing the token T in step 8, the first node N₁ may decline the token passing request R, e.g., if another node Nᵢ has already requested the token T or if the first node N₁ still needs to broadcast data D.

After passing the token T in step 8, as symbolised by a seventh step 9 of the method 2, the first node N₁ listens to the BIS B according to the timing information TI which has previously been advertised by the first node N₁ in step 4. Hence, the first node N₁ (and all other nodes N₂, N₃, N₄) stays synchronised according to the timing information TI after passing the token T.

After passing the token T in step 8, the second node N₂ holds the token T, symbolised by an eight step 10 of the method 2, as the first node N₁ did in step 3, and in a ninth step 11 of the method 2, the second node N₂ broadcasts data D via the BIS B (and optionally data D' via the BIS B') according to the timing information TI as the first node N₁ did in step 5 and as shown in the last BIG event E_{BIG} to the right of Fig. 3.

Thus, after carrying out steps 9 - 11, the first node N₁ and the second node N₂ have switched the roles of broadcasting node and synchronised listening node as illustrated by the token T and the broadcast waves W in Figs. 1 and 4. As a result, the communication via the BIS B (and optionally B') is seam-lessly continued despite token passing.

Optionally, the second node N₂ (in general: the token-holding node) also advertises the timing information TI of the BIS such that nodes joining the BLE communication network 1 can synchronise and take part in the communication.

Any node Nᵢ, e.g. the third node N₃ or the fourth node N₄, wishing to disseminate data may, likewise, request the token T and, when holding the token T, broadcast data D (D') via the BIS B (B') to continue the bidirectional communication via the BIS B (B').

The BLE communication network 1 may comprise only nodes Nᵢ which are in each others "one-hop neighbourhood", i.e. each node Nᵢ is in the communication range of each other node Nᵢ and may be reached directly (via "one hop"). Alternatively, the BLE communication network 1 may comprise nodes Nᵢ which are within each others "two-hop neighbourhood", i.e. at least two of the nodes Nᵢ are not in each others communication range and may communicate with each other via an intermediate node Nᵢ (via "two hops"). Generally, the method 2 may be carried out for nodes Nᵢ which are separated by any number of hops, but the method 2 is particularly suited when all nodes Nᵢ are within mutual one-hop neighbourhoods or two-hop neighbourhoods, i.e. having one intermediate node at most.

With reference to Figs. 1, 5 and 6 an optional variant for token-passing within a two-hop neighbourhood according to the method 2 shall now be described. Fig. 5 shows first and second nodes N₁, N₂ that are within a two-hop neighbourhood: The first node N₁ is outside the communication range CR₂ (dash-dotted circle) of the second node N₂ and the second node N₂ is outside the communication range CR₁ (solid circle) of the first node N₁. However, the third node N₃ is in the communication ranges CR₁, CR₂ of both the first and second nodes N₁, N₂, and the first and second nodes N₁, N₂ are each in the communication range CR₃ (dashed circle) of the third node N₃.

In the optional variant, the third node N₃ receives the timing information TI advertised in step 4 and the data D broadcasted in step 5 by the first node N₁. Being aware of the broadcasting node N₁ in its vicinity, the third node N₃ announces a presence P of the token T in its communication range CR₃, inter alia, to the second node N₂ in an intermediate step 6' as indicated by dotted announcing waves W'. The third node N₃ may announce the presence P, e.g., in BLE advertisements 15 - 17 shown in Fig. 6 (denoting signals transmitted by the third node N₃ by chequered rectangles), via a GATT communication in a GATT operation by means of a BLE link (not shown) or via a CIS in a CIS event by means of a BLE link (not shown).

The second node N₂ communicates the token passing request R in step 6 via the third node N₃ to the first node N₁, and the first node N₁ passes the token T to the second node N₂ in step 8 via the third node N₃. This may again be done in different ways. According to Figs. 5 and 6, a first BLE link L₁ is established between the second and third nodes N₂, N₃ and a second BLE link L₂ is established between the first and third nodes N₁, N₃. The token passing request R is transmitted via a GATT operation E_{G,2} of the second node N₂ by means of the first BLE link L₁ to the third node N₃ and via a GATT operation E_{G,3} of the third node N₃ by means of the second BLE link L₂ to the first node N₁. The confirmation A is transmitted via a GATT operation E_{G,1} of the first node N₁ by means of the second BLE link L₂ to the third node N₃ and via a GATT operation E_{G,3} of the third node N₃ by means of the first BLE link L₁ to the second node N₂ which, upon receiving the confirmation A holds the token T and may broadcast data in steps 10 and 11, e.g. as described above.

Alternatively, other variants of token passing may be employed. For instance, the token passing request R may be communicated via the third node N₃ by means of BLE advertisements of the second and third nodes N₂, N₃, in combination with BLE advertisements and/or BIS broadcasts of the first node N₁.

To synchronise the second node N₂ to the BIS B, the timing information TI of the BIS B may be communicated to the second node N₂, e.g., in the BLE advertisements 15 - 17 shown in Fig. 6 or in the confirmation A (not shown).

Returning to Fig. 2, the token T may be be pre-created or created by the first node N₁ within the method 2 in an initial step 3'.

To avoid the creation of two tokens T in the vicinity of the first node N₁ and, thus, cross-talk, the first node Nᵢ may optionally carry out a further initial step 3". In one variant of step 3", the first node N₁ checks that no node Nᵢ in its communication range CR₁ holds the token T, and creates the token T in step 3' only after such a check, i.e. after affirming that no token T is present within its one-hop neighbourhood. The check in step 3" may be performed by scanning for BLE advertisements or broadcasts of a token-holding node Nᵢ. In another variant of step 3" where nodes Nᵢ in the one-hop neighbourhood of the token-holding node Nᵢ are configured to announce the token T, the first node N₁ checks that no node Nᵢ in its communication range CR₁ holds the token T and - in addition - that no node Nᵢ in its communication range CR₁ announces the token T, and creates the token T in step 3' only after such a check, i.e. after affirming that no token T is present within its two-hop neighbourhood.

With reference to Fig. 7, the first node N₁ optionally carries out said checking step 3" repetitively in a number M of at least two subsequent time intervals ΔT before creating the token T, to impede a simultaneous creation of two tokens T by vicinal nodes Nᵢ.

In one variant of repetitively checking, said number M is determined by the first node N₁ in a randomized manner, i.e. by means of randomisation. This may be done in many different ways. In one example, the first node N₁ generates the number M as a random number, e.g. before, in or after the first time interval ΔT and performs said check M times. In another example, the first node N₁ generates a random number r in each of said time intervals ΔT and creates the token T only when the random number r in a certain time interval ΔT fulfils a given criterion, e.g. is above or below a given threshold, equals a given number, etc. In the example of Fig. 7, the first node N₁ creates the token T when the random number r equals zero and, thus, in or after the third time interval ΔT, i.e. the number M is randomly determined as M = 3.

In another variant of repetitively checking, said number M is node-specific, i.e. each node Nᵢ wanting to create and hold the token T checks for a different predefined number Mᵢ of time intervals ΔT before creating the token T. For instance, the first and second nodes N₁, N₂ in Fig. 1 may want to create the token T at the same time, the first node N₁ checking for a node-specific number of three time intervals ΔT, i.e. M₁ = 3, and the second node N₂ checking for a node-specific number of four time intervals ΔT, i.e. M₂ = 4, before creating the token T. In this scenario, the first node N₁ creates the token T in or after the third time interval ΔT and the second node N₂ checks in the fourth time interval ΔT that the first node N₁ already holds the token T (e.g. by receiving BLE advertisements and/or BIS broadcasts of the first node N₁) and, thus, refrains from creating a token.

The nodes Nᵢ of the BLE communication network 1 may keep only one token T within the two-hop neighbourhood of each token-holding node Nᵢ by carrying out further optional steps 11', 11" of the method 2 (Fig. 2). For instance, assuming that the first and second nodes N₁, N₂ in Fig. 5 each hold a token at the same time (not shown), the third node N₃ may detect the presence of two tokens T, T' in its communication range CR₃ in step 11', e.g. by receiving BLE advertisements and/or BIS broadcasts from two nodes, and initiate the removal of one of the two tokens T, T' in step 11", e.g., by communicating a token removing request to one of the token-holding nodes or by requesting both tokens T, T' and removing one on its own.

It is noted that the steps 3 - 11 and the optional steps 3', 3", 11', 11" of the method 2 may be carried out in any order and also in parallel as long as one step does not depend on the result of another step.

While the method 2 has been described exemplarily with fixed roles of the nodes Nᵢ, it goes without saying that each node Nᵢ may have the capability to perform the steps described with reference to the first node N₁, in particular steps 3 - 5, 7 - 9 and optional steps 3', 3", to perform the steps described with reference to the second node N₂, in particular steps 6, 10 and 11, and to perform the steps described with reference to the third node N₃, in particular steps 6', 11' and 11".

The invention is not restricted to the specific embodiments described above but encompasses all variants, modifications and combinations thereof that fall within the scope of the appended claims.

## Claims

1. A method for communicating in a Bluetooth Low Energy, BLE, communication network (1) comprising a plurality of nodes (N₁ - N₄), each of which is configured to broadcast data (D) via a broadcast isochronous stream, BIS, (B) only when holding a token (T), the method (2) comprising:
by a first node (N₁) of the BLE communication network (1), holding (3) the token (T), advertising (4) timing information (TI) of the BIS (B), and broadcasting (5) data (D) via the BIS (B) according to said timing information (TI);
by a second node (N₂) of the BLE communication network (1), communicating (6) a token passing request (R) to the first node (N₁);
by the first node (N₁), receiving (7) the token passing request (R), passing (8) the token (T) to the second node (N₂), and listening (9) to the BIS (B) according to said timing information (TI); and
by the second node (N₂), holding (10) the token (T) and broadcasting (11) data (D) via the BIS (B) according to said timing information (TI).

2. The method according to claim 1, wherein the second node (N₂) establishes a BLE link (L) with the first node (N₁) and communicates (6) the token passing request (R) by means of the BLE link (L).

3. The method according to claim 1, wherein the first and second nodes (N₁, N₂) are outside of each other's communication range (CR₁, CR₂) and the BLE network (1) comprises a third node (N₃) in each of the communication ranges (CR₁, CR₂) of the first and second nodes (N₁, N₂), and wherein the third node (N₃) announces (6') a presence (P) of the token (T) in its communication range (CR₃) to the second node (N₂), the second node (N₂) communicates (6) the token passing request (R) via the third node (N₃) to the first node (N₁), and the first node (N₁) passes the token (T) to the second node (N₂) via the third node (N₃).

4. The method according to any one of claims 1 to 3, comprising: by the first node (N₁), before holding (3) the token (T), checking (3") that no node (Nᵢ) in its communication range (CR₁) holds the token (T) or announces the presence (P) of the token (T) and, after said checking (3"), creating (3') the token.

5. The method according to claim 4, wherein the first node (N₁) performs said checking (3") in a number (M) of at least two subsequent time intervals (ΔT) before creating (3') the token (T), wherein said number (M) is either node-specific or determined by the first node (N₁) in a randomized manner.

6. The method according to any one of claims 1 to 5, comprising: by one node (Nᵢ) of the BLE communication network (1), detecting (11') the presence of two tokens (T, T') in its communication range (CRᵢ) and initiating (11") the removal of one of the two tokens (T, T').

7. A Bluetooth Low Energy, BLE, communication network comprising a plurality of nodes (N₁ - N₄), each of which is configured to broadcast data (D) via a broadcast isochronous stream, BIS, (B) only when holding a token (T),
wherein a first node (N₁) of the BLE communication network (1) is configured to hold (3) the token (T), advertise (4) timing information (TI) of the BIS (B), and broadcast (5) data (D) via the BIS (B) according to said timing information (TI),
wherein a second node (N₂) of the BLE communication network (1) is configured to communicate (6) a token passing request (R) to the first node (N₁);
wherein the first node (N₁) is further configured to receive (7) the token passing request (R), pass (8) the token (T) to the second node (N₂), and listen (9) to the BIS (B) according to said timing information (TI); and
wherein the second node (N₂) is further configured to hold (10) the token (T) and broadcast (11) data (D) via the BIS (B) according to said timing information (TI).

8. The BLE communication network according to claim 7, wherein the second node (N₂) is configured to establish a BLE link (L) with the first node (N₁) and communicate (6) the token passing request (R) by means of the BLE link (L).

9. The BLE communication network according to claim 7, wherein the first and second nodes (N₁, N₂) are outside of each others communication range (CR₁, CR₂) and the BLE network (1) comprises a third node (N₃) in each of the communication ranges (CR₁, CR₂) of the first and second nodes (N₁, N₂), and wherein the third node (N₃) is configured to announce (6') a presence (P) of the token (T) in its communication range (CR₃) to the second node (N₂), the second node (N₂) is configured to communicate (6) the token passing request (R) via the third node (N₃) to the first node (N₁), and the first node (N₁) is configured to pass (8) the token (T) to the second node (N₂) via the third node (N₃).

10. The BLE communication network according to any one of claims 7 to 9, wherein the first node (N₁) is configured to, before holding (3) the token (T), check (3") that no node (Nᵢ) in its communication range (CR₁) holds the token (T) or announces the presence (P) of the token (T) and, after said checking (3"), create (3') the token (T).

11. The BLE communication network according to claim 10, wherein the first node (N₁) is configured to perform said checking (3") in a number (M) of at least two subsequent time intervals (ΔT) before creating (3') the token (T), wherein said number (M) is either node-specific or determined by the first node (N₁) in a randomized manner.

12. The BLE communication network according to any one of claims 7 to 11, wherein at least one node (Nᵢ) of the BLE communication network (1) is configured to detect (11') the presence of two tokens (T, T') in its communication range (CRᵢ) and initiate (11") the removal of one of the two tokens (T, T').

13. A node for a Bluetooth Low Energy, BLE, communication network (1), wherein the node (N₁) is configured to hold (3) a token (T), to advertise (4) timing information (TI) of a broadcast isochronous stream, BIS (B), to broadcast (5) data (D) via the BIS (B) according to said timing information (TI), to receive (7) a token passing request (R) from an other node (N₂) of the BLE communication network (1), to pass (8) the token (T) to said other node (N₂), and to listen (9) to the BIS (B) according to said timing information (TI), wherein the node (N₁) is configured to broadcast (5) data (D) via the BIS (B) only when holding the token (T).

14. The node according to claim 13, wherein the node (N₁) is configured to, when not holding the token (T), check (3") that no node (Nᵢ) in its communication range (CR₁) holds the token (T) or announces the presence (P) of the token (T) and, after said checking (3"), create (3') the token (T).

15. The node according to claim 14, wherein the node (N₁) is configured to perform said checking (3") in a number (M) of at least two subsequent time intervals (ΔT) before creating (3') the token (T), wherein said number (M) is either node-specific or determined by the node (N₁) in a randomized manner.

## Amended claims

### Amended claims in accordance with Rule 137(2) EPC.

1. A method for communicating in an ad-hoc Bluetooth Low Energy, BLE, communication network (1) comprising a plurality of nodes (N₁ - N₄), each of which is configured to broadcast data (D) via a broadcast isochronous stream, BIS, (B) only when holding a token (T), the method (2) comprising:
by a first node (N₁) of the BLE communication network (1), holding (3) the token (T), advertising (4) timing information (TI) of the BIS (B), and broadcasting (5) data (D) via the BIS (B) according to said timing information (TI);
by a second node (N₂) of the BLE communication network (1), communicating (6) a token passing request (R) to the first node (N₁);
by the first node (N₁), receiving (7) the token passing request (R), passing (8) the token (T) to the second node (N₂), and listening (9) to the BIS (B) according to said timing information (TI); and
by the second node (N₂), holding (10) the token (T) and broadcasting (11) data (D) via the BIS (B) according to said timing information (TI).

2. The method according to claim 1, wherein the second node (N₂) establishes a BLE link (L) with the first node (N₁) and communicates (6) the token passing request (R) by means of the BLE link (L).

3. The method according to claim 1, wherein the first and second nodes (N₁, N₂) are outside of each other's communication range (CR₁, CR₂) and the BLE network (1) comprises a third node (N₃) in each of the communication ranges (CR₁, CR₂) of the first and second nodes (N₁, N₂), and wherein the third node (N₃) announces (6') a presence (P) of the token (T) in its communication range (CR₃) to the second node (N₂), the second node (N₂) communicates (6) the token passing request (R) via the third node (N₃) to the first node (N₁), and the first node (N₁) passes the token (T) to the second node (N₂) via the third node (N₃).

4. The method according to any one of claims 1 to 3, comprising: by the first node (N₁), before holding (3) the token (T), checking (3") that no node (Nᵢ) in its communication range (CR₁) holds the token (T) or announces the presence (P) of the token (T) and, after said checking (3"), creating (3') the token.

5. The method according to claim 4, wherein the first node (N₁) performs said checking (3") in a number (M) of at least two subsequent time intervals (ΔT) before creating (3') the token (T), wherein said number (M) is either node-specific or determined by the first node (N₁) in a randomized manner.

6. The method according to any one of claims 1 to 5, comprising: by one node (Nᵢ) of the BLE communication network (1), detecting (11') the presence of two tokens (T, T') in its communication range (CRᵢ) and initiating (11") the removal of one of the two tokens (T, T').

7. An ad-hoc Bluetooth Low Energy, BLE, communication network comprising a plurality of nodes (N₁ - N₄), each of which is configured to broadcast data (D) via a broadcast isochronous stream, BIS, (B) only when holding a token (T),
wherein a first node (N₁) of the BLE communication network (1) is configured to hold (3) the token (T), advertise (4) timing information (TI) of the BIS (B), and broadcast (5) data (D) via the BIS (B) according to said timing information (TI),
wherein a second node (N₂) of the BLE communication network (1) is configured to communicate (6) a token passing request (R) to the first node (N₁);
wherein the first node (N₁) is further configured to receive (7) the token passing request (R), pass (8) the token (T) to the second node (N₂), and listen (9) to the BIS (B) according to said timing information (TI); and
wherein the second node (N₂) is further configured to hold (10) the token (T) and broadcast (11) data (D) via the BIS (B) according to said timing information (TI).

8. The BLE communication network according to claim 7, wherein the second node (N₂) is configured to establish a BLE link (L) with the first node (N₁) and communicate (6) the token passing request (R) by means of the BLE link (L).

9. The BLE communication network according to claim 7, wherein the first and second nodes (N₁, N₂) are outside of each others communication range (CR₁, CR₂) and the BLE network (1) comprises a third node (N₃) in each of the communication ranges (CR₁, CR₂) of the first and second nodes (N₁, N₂), and wherein the third node (N₃) is configured to announce (6') a presence (P) of the token (T) in its communication range (CR₃) to the second node (N₂), the second node (N₂) is configured to communicate (6) the token passing request (R) via the third node (N₃) to the first node (N₁), and the first node (N₁) is configured to pass (8) the token (T) to the second node (N₂) via the third node (N₃).

10. The BLE communication network according to any one of claims 7 to 9, wherein the first node (N₁) is configured to, before holding (3) the token (T), check (3") that no node (Nᵢ) in its communication range (CR₁) holds the token (T) or announces the presence (P) of the token (T) and, after said checking (3"), create (3') the token (T).

11. The BLE communication network according to claim 10, wherein the first node (N₁) is configured to perform said checking (3") in a number (M) of at least two subsequent time intervals (ΔT) before creating (3') the token (T), wherein said number (M) is either node-specific or determined by the first node (N₁) in a randomized manner.

12. The BLE communication network according to any one of claims 7 to 11, wherein at least one node (Nᵢ) of the BLE communication network (1) is configured to detect (11') the presence of two tokens (T, T') in its communication range (CRᵢ) and initiate (11") the removal of one of the two tokens (T, T').

13. A node for an ad-hoc Bluetooth Low Energy, BLE, communication network (1), wherein the node (N₁) is configured to hold (3) a token (T), to advertise (4) timing information (TI) of a broadcast isochronous stream, BIS (B), to broadcast (5) data (D) via the BIS (B) according to said timing information (TI), to receive (7) a token passing request (R) from an other node (N₂) of the BLE communication network (1), to pass (8) the token (T) to said other node (N₂), and to listen (9) to the BIS (B) according to said timing information (TI), wherein the node (N₁) is configured to broadcast (5) data (D) via the BIS (B) only when holding the token (T).

14. The node according to claim 13, wherein the node (N₁) is configured to, when not holding the token (T), check (3") that no node (Nᵢ) in its communication range (CR₁) holds the token (T) or announces the presence (P) of the token (T) and, after said checking (3"), create (3') the token (T).

15. The node according to claim 14, wherein the node (N₁) is configured to perform said checking (3") in a number (M) of at least two subsequent time intervals (ΔT) before creating (3') the token (T), wherein said number (M) is either node-specific or determined by the node (N₁) in a randomized manner.
